(19) Europäisches Patentamt
European Patent Office
Office européen des brevets

(11) **EP 4 618 399 A1**

(12) **EUROPEAN PATENT APPLICATION**

(43) Date of publication:
**17.09.2025 Bulletin 2025/38**

(21) Application number: **25156684.0**

(22) Date of filing: **07.02.2025**

(51) International Patent Classification (IPC):
**H02M 7/48** (2007.01)     **H02M 1/38** (2007.01)
**H02M 1/00** (2006.01)

(52) Cooperative Patent Classification (CPC):
**H02M 1/0058; H02M 1/38; H02M 7/4811**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2024 US 202463565328 P
15.01.2025 US 202519021933**

(71) Applicant: **Deere & Company
Moline, IL 61265 (US)**
(72) Inventors:
• **LIN, Nan**
**Fargo (US)**
• **SINGH, Brij N.**
**West Fargo (US)**
• **WU, Yuheng**
**Fargo (US)**
• **WEHRI, Zachary**
**Fargo (US)**
• **WU, Long**
**Fargo (US)**

(74) Representative: **Reddie & Grose LLP
The White Chapel Building
10 Whitechapel High Street
London E1 8QS (GB)**

(54) **MULTI-OBJECTIVE DESIGN OPTIMIZATION METHOD FOR AUXILIARY RESONANT COMMUTATED POLE INVERTER**

(57) A method for optimizing an inverter for soft switching according to at least some example embodiments includes calculating efficiency values of the inverter based on a plurality of possible resonant inductance values and a plurality of possible resonant capacitance values, calculating change of voltage over time values of the inverter based on the plurality of possible resonant inductance values and the plurality of possible resonant capacitance values, and selecting a resonant inductance value of the plurality of possible resonant inductance values and a resonant capacitance value of the plurality of possible resonant capacitance values based on the calculated efficiency values of the inverter and the calculated change of voltage over time values.

**FIG. 1**

## Description

GOVERNMENT LICENSE RIGHTS

This invention was made with government support under DE-EE0009874 awarded by United States Department of Energy. The government has certain rights in the invention.

CROSS-REFERENCE TO RELATED APPLICATIONS

This application claims priority under 35 U.S.C. § 119(e) to U.S. Provisional Appln. No. 63/565,328 filed on March 14, 2024, the entire contents of which are hereby incorporated by reference.

SUMMARY

Some example embodiments provide systems and methods for multi-objective design optimization for an auxiliary resonant commutated pole inverter. The invention is defined in the independent claims to which reference should now be directed. Advantageous features are set out in the dependent claims.

BRIEF DESCRIPTION OF THE DRAWINGS

The various features and advantages of the non-limiting embodiments herein may become more apparent upon review of the detailed description in conjunction with the accompanying drawings. The accompanying drawings are merely provided for illustrative purposes and should not be interpreted to limit the scope of the claims. The accompanying drawings are not to be considered as drawn to scale unless explicitly noted. For the purposes of clarity, various dimensions of the drawings may have been exaggerated.

FIG. 1 illustrates a schematic of an electric drive system according to an example embodiment.
FIG. 2 illustrates an equivalent circuit of the inverter shown in FIG. 1.
FIG. 3A illustrates one phase-leg of the inverter shown in FIG. 2.
FIG. 3B is an operation waveform for one switching cycle of the one phase-leg shown in FIG. 4A.
FIG. 3C illustrates a diagram of variable timing control according to example embodiments.
FIG. 4 is a flow chart illustrating a method according to example embodiments.
FIG. 5 is an operation waveform illustrating design parameters of an inverter according to example embodiments.
FIG. 6A illustrates an equivalent circuit of a resonance period between t6 and t7 of FIG. 3B according to example embodiments.
FIG. 6B illustrates an equivalent circuit of a resonance period between t1 and t2 of FIG. 3B according to example embodiments.
FIGS. 7A and 7B illustrate polyfit functions according to example embodiments.
FIG. 8 is a flow chart illustrating a method according to example embodiments.
FIG. 9 is an example of inverter efficiency of an inverter according to example embodiments.

DETAILED DESCRIPTION

Some example embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail below. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, or in some cases be performed in reverse order.

It will be understood that when an element is referred to as being "connected" or "coupled" to another element, it may be directly connected or coupled to the other element or intervening elements may be present. As used herein the term "and/or" includes any and all combinations of one or more of the associated listed items.

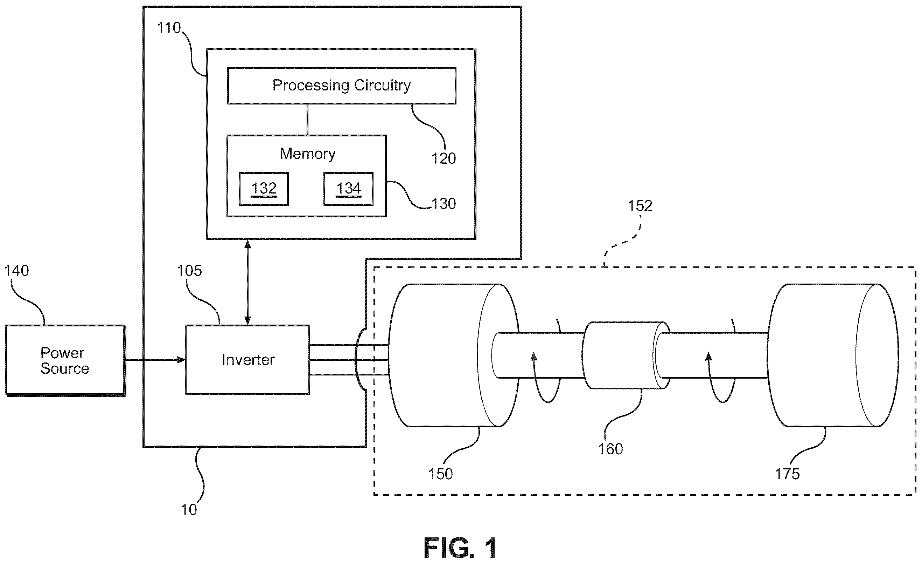

FIG. 1 illustrates a schematic of an electric drive system according to an example embodiment.

As shown in FIG. 1, an electric drive 10 includes an inverter 105 and a controller 110 to generate commands (e.g., voltage and/or current commands) for an electric machine 150 (e.g., a motor). The electric machine 150 is part of a modeled electro-mechanical system 152. In addition to the electric machine 150, the modeled electro-mechanical system 152 includes a mechanical load 175 and a coupler 160. The electric machine 150 is coupled to the mechanical load 175 though the coupler 160 (e.g., a compliant coupler modelled by stiffness and damping properties). The coupler 160 comprises a mechanical, rotational coupler, such as a flexible coupler, a bellows coupler, a flexible joint, a universal joint, a flange coupler, a gearbox, or a transmission, for example. The electric machine 150 is configured to drive the mechanical load 175 based on the commands provided to the electric machine 150 from the controller 110. A power source 140 provides power to the inverter 105. For example, the power source 140 may provide DC power to the inverter 105. For example, the power source 140 may be a battery. The inverter 105 may convert DC input into AC current to drive the motor 150.

In some example embodiments, the controller 110 includes processing circuitry 120 and memory 130. The controller 110 is configured to perform the methods and algorithms described herein. In some example embodiments, the processing circuitry 120 is configured to execute instructions stored in the memory 130 to cause the electric drive 10 to perform the methods and algorithms described herein. In some example embodiments, the controller 110 may be electrically connected to the inverter as shown in FIG. 1. However, example embodiments are not limited thereto and in some example embodiments the controller 110 may implement a simulation of the inverter 105.

The term 'processing circuitry,' as used in the present disclosure, may refer to, for example, hardware including logic circuits; a hardware/software combination such as a processor executing software; or a combination thereof. For example, the hardware more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

According to some example embodiments, the memory 130 may be a tangible, non-transitory computer-readable medium, such as a Random Access Memory (RAM), a flash memory, a Read Only Memory (ROM), an Electrically Programmable ROM (EPROM), an Electrically Erasable Programmable ROM (EEPROM), registers, a hard disk, a removable disk, a Compact Disk (CD) ROM, any combination thereof, or any other form of storage medium known in the art.

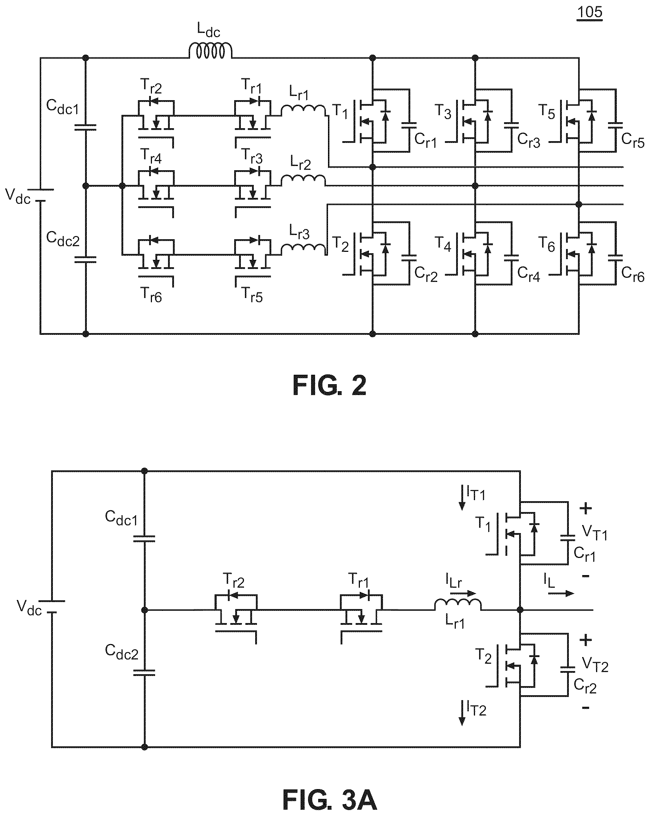

FIG. 2 illustrates an equivalent circuit of the inverter shown in FIG. 1.

Referring to FIG. 2, inverter 105 may include first capacitors $C_{dc1}$-$C_{dc2}$, second capacitors $C_{r1}$-$C_{r6}$, first switches $T_1$-$T_6$, second switches $T_{r1}$-$T_{R6}$, inductors $L_{r1}$-$L_{r3}$ and/or inductor $L_{dc}$. The inverter 105 may receive an input voltage $V_{dc}$ from, for example, the power source 140 and may output an output voltage $V_{ac}$ to, for example, the electric machine 150. The first switches $T_1$-$T_6$ may be referred to herein as main switches and the second switches $T_{r1}$-$T_{R6}$ may be referred to herein as auxiliary switches. The first switches $T_1$-$T_6$ and the second switches $T_{r1}$-$T_{r6}$ may be switching semiconductors (e.g., insulated gate bipolar transistors (IGBT), silicon carbide (SiC) metal-oxide-semiconductor field effect transistors (MOSFETs), or other power transistors). The first switches $T_1$-$T_6$ may be turned on under zero voltage switching (ZVS). Auxiliary switches $T_{r1}$-$T_{r6}$ may realize zero current switching (ZCS) during turn-off periods. The first capacitors $C_{dc1}$-$C_{dc2}$ may be referred to herein as main capacitors and the second capacitors $C_{r1}$-$C_{r6}$ may be referred to herein as resonant capacitors. The inductors $L_{r1}$-$L_{r3}$ may be referred to as resonant inductors and may be variable inductors.

According to some example embodiments, the inverter 105 may be an auxiliary resonant commutated pole (ARCP) inverter.

As shown in FIG. 2, a first terminal of the first capacitor $C_{dc1}$ is connected to a first terminal of inductor $L_{dc}$. A second terminal of inductor $L_{dc}$ is connected to a drain of first switches $T_1$, $T_3$, and $T_5$. A first terminal of the first capacitor $C_{dc2}$ is connected to a source of first switches $T_2$, $T_4$, and $T_6$. A second terminal of capacitor $C_{dc1}$ is connected to a second terminal of first capacitor $C_{dc2}$ and to drains of second switches $T_{r2}$, $T_{r4}$, and $T_{r6}$. Sources of second switches $T_{r2}$, $T_{r4}$, and $T_{r6}$ are connected, respectively, to sources of second switches $T_{r1}$, $T_{r3}$, and $T_{r5}$. Drains of second switches $T_{r1}$, $T_{r3}$, and $T_{r5}$ are connected, respectively, to first terminals of inductors $L_{r1}$, $L_{r2}$, and $L_{r3}$. A second terminal of inductor $L_{r1}$ is connected to a source of first switch $T_1$ and a drain of second switch $T_2$. A second terminal of inductor $L_{r2}$ is connected to a source of first switch $T_3$ and a drain of first switch $T_4$. A second terminal of inductor $L_{r3}$ is connected to a source of first switch $T_5$ and a drain of first switch $T_6$. Each of first switches $T_1$-$T_6$ is connected in parallel to a respective second capacitor $C_{r1}$-$C_{r6}$. For example, a first terminal of each second capacitor $C_{r1}$-$C_{r6}$ is connected to a source of a respective first switch $T_1$-$T_6$ and a second terminal of each second capacitor $C_{r1}$-$C_{r6}$ is connected to a drain of the respective first switch $T_1$-$T_6$. Thus, a resonant capacitor $C_r$ is connected in parallel to each main switch T while a resonant inductor $L_r$ is connected between the auxiliary switches $T_r$ and a middle point in each phase of the inverter 105.

The controller 110 may control the first switches $T_1$-$T_6$ and the second switches $T_{r1}$-$T_{r6}$ to provide soft switching in which voltage and current waveforms of the switches do not overlap with each other, so that the switching energy is reduced, as described in R. W. De Doncker and J. P. Lyons, "The auxiliary resonant commutated pole converter," Conference Record of the 1990 IEEE Industry Applications Society Annual Meeting, Seattle, WA, USA, 1990, pp. 1228-1235 vol.2 and Bijlenga et al. "ARCP CONVERTER AND A METHOD FOR CONTROL THEREOF," U.S. Patent US 2004/0246756A1, Dec. 9, 2004, which are herein incorporated by reference in its entirety.

FIG. 3A illustrates one phase leg of the inverter 105.

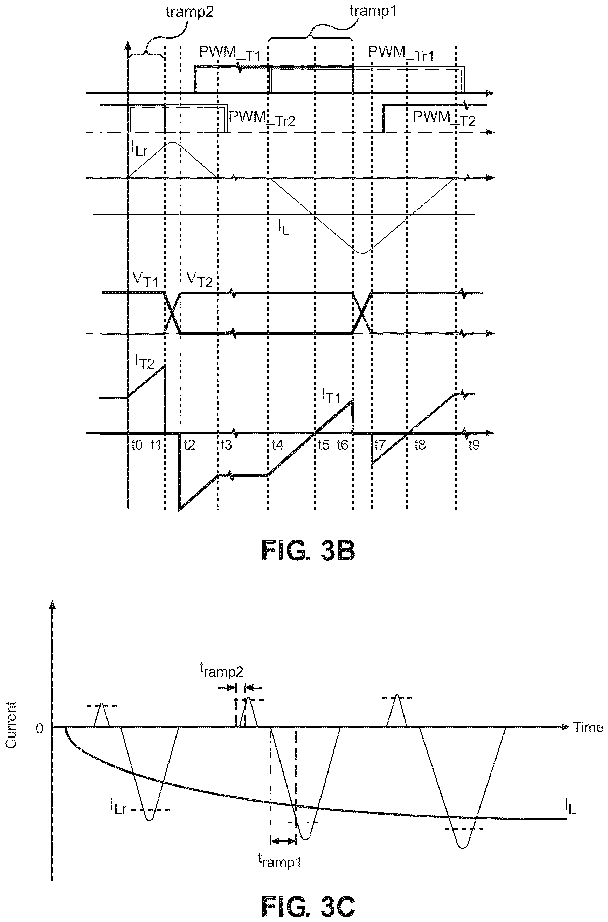

FIG. 3B is an operation waveform for one switching cycle of the one phase-leg of the inverter 105 shown in FIG. 3A.

FIG. 3C illustrates a diagram of variable timing control according to example embodiments.

Referring to FIGS. 3A to 3C, the top two rows of FIG. 3B show pulse-width modulation (PWM) signals $PWM_{T1}$, $PWM_{T2}$, $PWM_{Tr1}$, and $PWM_{Tr2}$ of main switches $T_1$ and $T_2$ and auxiliary switches $T_{r1}$ and $T_{r2}$, respectively. The middle rows of FIG. 3B show a load current $I_L$ and an inductor current $I_{Lr}$ through the resonant inductor $L_{r1}$. The bottom two rows of FIG. 3B show voltage waveforms $V_{T1}$ and $V_{T2}$ and current waveforms $I_{T1}$ and $I_{t2}$ of the main switches $T_1$ and $T_2$, respectively.

As shown in FIG. 3B, a switching cycle may include two resonant inductor current pulses with different amplitudes. A resonance period occurs during the periods when the absolute value of the inductor current $I_{Lr}$ is higher than the dashed lines shown in Fig. 3C.

The time during which the resonant inductor $L_{r1}$ current ramps up before the resonance period is denoted in FIGS. 3B and 3C as first and second ramp periods $t_{ramp1}$ and $t_{ramp2}$. The ramp period $t_{ramp}$ for the inductor current $I_{Lr}$ pulse with higher amplitude in a switching cycle is denoted as a first ramp period $t_{ramp1}$ while the ramp period $t_{ramp}$ for the inductor current $I_{Lr}$ pulse with a lower amplitude in a switching cycle is denoted as a second ramp period $t_{ramp2}$.

First ramp period $t_{ramp1}$ and second ramp period $t_{ramp2}$ are also the periods during which a main switch $T_1$ or $T_2$, and its corresponding auxiliary switch $T_{r1}$ or $T_{r2}$ are turned on at the same time, as shown in FIG. 3B. The first and second ramp periods $t_{ramp1}$ and $t_{ramp2}$ determine the amplitude of inductor current $I_{Lr}$ pulses, which further affect the following resonances of the circuit. Variable timing control may be achieved, according to example embodiments, by regulating first and second ramp periods $t_{ramp1}$ and $t_{ramp2}$ according to the load current $I_L$.

A design method according to example embodiments may achieve soft switching in the inverter 105.

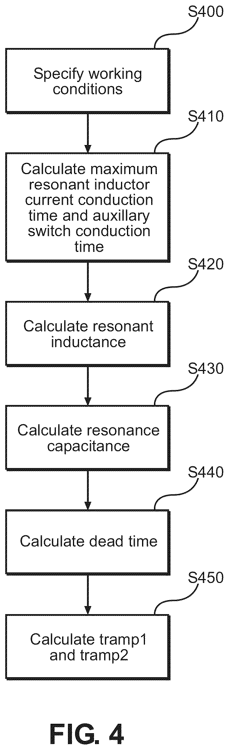

FIG. 4 is a flow chart illustrating a general design method according to example embodiments. The method shown in FIG. 4 may be performed at the controller 110.

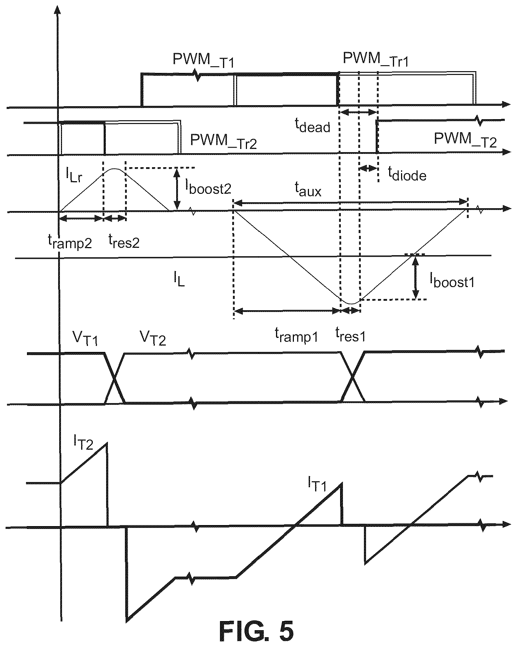

FIG. 5 is an operation waveform illustrating design parameters of the inverter 105.

Referring to FIG. 4, at S400 the controller 110 specifies working conditions of the inverter 105 according to load and power device characteristics. For example, the controller 110 may determine parameters indicating the working conditions of the inverter 105 including a DC bus voltage $V_{DC}$, a switching frequency fsw, a modulation index MI, and/or a rated output power $P_{out}$. A peak phase current $I_{phase\_peak}$ may be calculated based on the rated output power $P_{out}$ and the load. A maximum resonance time $t_{res\_max}$ may be determined according to a desired change of voltage over time dV/dt.

The controller 110 may determine the working conditions of the inverter 105 according to any known method. For example, the controller 110 may determine working conditions of the inverter 105 according to a look-up table. An example of parameters for a 10-kW design are shown in Table 1.

Table 1

| Parameters | Values |
|---|---|
| $V_{dc}$ | 700 V |
| fsw | 500 kHz |
| MI | 0.79 |
| $P_{out}$ | 10 kW |
| $I_{phase\_peak}$ | 45 A |
| $T_{res\_max}$ | 250 ns |

Returning to FIG. 4, at S410 the controller 110 calculates a maximum resonant inductor current conduction time $t_{aux\_max}$ and an auxiliary switch conduction time $t_{aux\_sw}$. The maximum resonant inductor current conduction time $t_{aux\_max}$ is determined to be smaller than a minimum pulse width of main switch gate signals $t_{pulse\_min}$. Using the maximum resonant inductor current conduction time $t_{aux\_max}$ smaller than the minimum pulse width of main switch gate signals $t_{pulse\_min}$ may ensure that auxiliary switches $T_r$ are turned off before the next corresponding main switches $T$ are turned on. Typically, the maximum resonant inductor current conduction time $t_{aux\_max}$ value should be much smaller than the switching period to reduce or minimize the effect of the resonance circuit. The minimum pulse width of main switch gate signals $t_{pulse\_min}$ may be determined according to Equation 1.

Equation 1

$$t_{pulse\_min} = \frac{1 - MI}{2f_{SW}}$$

At S420 the controller 110 calculates a resonant inductance $L_r$. The value of the resonant inductance $L_r$ may be determined based on a maximum ramp value $t_{ramp\_max}$. The maximum ramp value $t_{ramp\_max}$ may be a maximum value of first and second ramp periods $t_{ramp1}$ and $t_{ramp2}$, which is related (e.g., directly related) to the maximum value of inductor current $I_{Lr}$ and further affects resonant behavior. The maximum ramp value $t_{ramp\_max}$ is used to determine an inductance value for an inductor $L_r$ to provide the maximum resonant current. The maximum ramp value $t_{ramp\_max}$ may be calculated according to Equation 2. The inductance value for the inductor $L_r$ may be further calculated according to Equation 3.

Referring to FIG. 5, a first boost current $I_{boost1}$ indicates a difference between load current $I_L$ and inductor current $I_{Lr}$ at the beginning of the resonance period of the inductor current $I_{Lr}$ pulse. A second boost current $I_{boost2}$ is the value of inductor current $I_{Lr}$ at the beginning of the resonance of the other inductor current $I_{Lr}$ pulse. First and second boost currents $I_{boost1}$ and $I_{boost2}$ are related (e.g., directly related) to the resonance energy needed for soft switching. First and second boost currents $I_{boost1}$ and $I_{boost2}$ should be large enough to provide enough resonance energy, but small enough to limit the inductor current $I_{Lr}$ peak value. In some example embodiments, the first and second boost currents $I_{boost1}$ and $I_{boost2}$ may be set equal each other. For example, first and second boost currents $I_{boost1}$ and $I_{boost2}$ may be set to equal 10 A. However, example embodiments are not limited thereto. When first and second boost currents $I_{boost1}$ and $I_{boost2}$ are set to be equal, they may be referred to collectively as boost current $I_{boost}$.

Equation 2

$$t_{ramp\_max} = \frac{t_{aux\_max} - t_{res\_max}}{2}$$

Equation 3

$$L_r = \frac{\frac{V_{dc}}{2} t_{ramp\_max}}{I_{boost} + I_{phase\_peak}}$$

Returning to FIG. 4, at S430 the controller 110 calculates a resonance capacitance $C_r$. The resonance capacitance $C_r$ may be calculated according to Equation 4, where $Z_0 = \sqrt{\frac{L_r}{2C_r}}$ and $w_0 = \frac{1}{\sqrt{2L_rC_r}}$.

Equation 4

$$t_{res\_max} = \frac{2}{w_0} tan^{-1} \frac{V_{dc}}{2Z_0 I_{boost}}$$

At S440 the controller 110 calculates a dead time $t_{dead}$. The dead time $t_{dead}$ may be a key parameter to be calculated for soft switching. The dead time $t_{dead}$ should be longer than the resonance time for ZVS of the main switches T. However, if the dead time $t_{dead}$ is too long, the ZVS may fail. Referring to FIG. 3B, the PWM signal $PWM_{\_T2}$ should be enabled between t7 and t8 when there is negative current through main switch T2. The period between $t_7$ and $t_8$ may be denoted as a diode time $t_{diode}$ and may be calculated according to Equation 5.

Equation 5

$$t_{diode} = \frac{I_{boost} L_r}{\frac{V_{dc}}{2}}$$

If the dead time $t_{dead}$ is longer than the period between t6 and t8, main switch $T_2$ will lose ZVS because its current becomes positive after t8. Therefore, there is an upper limit for the dead time $t_{dead}$ to ensure ZVS of main switch $T_2$. The resonance time before main switch $T_2$ is turned on may be denoted as first resonance time $t_{res1}$ and may be calculated according to Equation 6.

Equation 6

$$t_{res1} = \frac{2}{w_0} tan^{-1} \frac{V_{dc}}{2Z_0 I_{boost1}}$$

The dead time $t_{dead}$ before main switch $T_2$ turns on may be calculated according to Equation 7.

Equation 7

$$t_{res1} < t_{dead} < t_{res1} + t_{diode}$$

For the turn-on event of main switch $T_1$, since the main switch current $I_{T1}$ is negative except for a short period before turn-off, there is no upper limit for the dead time $t_{dead}$. The lower limit of the dead time $t_{dead}$ should be longer than a second resonance period $t_{res2}$ during which the resonant inductor current $I_{Lr}$ through the resonant inductor $L_{r1}$ is at a maximum. The dead time $t_{dead}$ before turn-on of main switch $T_1$ may be set according to Equation 8 and the second resonance period $t_{res2}$ may be calculated according to Equation 9.

Equation 8

$$t_{dead} > t_{res2}$$

Equation 9

$$t_{res2} = \frac{2}{w_0} tan^{-1} \frac{V_{dc}}{2Z_0 I_{boost2}}$$

Returning to FIG. 4, at S450 the controller 110 determines first and second ramp periods $t_{ramp1}$ and $t_{ramp2}$ according to the load current $I_L$. According to example embodiments, for variable timing control of the inverter 105, first ramp period $t_{ramp1}$ and/or second ramp period $t_{ramp2}$ may be regulated according to the load current $I_L$ to reduce or minimize the resonant inductor current $I_{Lr}$ through the resonant inductor $L_{r1}$. Accordingly, the controller 110 determines a relationship between first ramp period $t_{ramp1}$ and second ramp period $t_{ramp2}$ and the load current $I_L$ which will be used to control the inverter 105.

First and second ramp periods $t_{ramp1}$ and $t_{ramp2}$ are related to first and second boost currents $I_{boost1}$ and $I_{boost2}$, which directly contribute to amplitudes of the two resonant inductor current $I_{Lr}$ pulses shown in FIG. 5. For example, $t_{ramp1}$ may be directly related to $I_{boos1}$, as expressed by Equation 14 and $t_{ramp2}$ may be directly related to $I_{boost2}$ as expressed by Equation 15. Therefore, current stress may be reduced by reducing or minimizing first boost current $I_{boost1}$ and/or second boost current $I_{boost2}$.

First and second boost currents $I_{boost1}$ and $I_{boost2}$ may affect the energy available for their corresponding resonance period. For example, the energy available for a first resonance period is equal to $\frac{1}{2} * L_r * I^2_{boost1\_min}$ and the energy for a second resonance period is $\frac{1}{2} * L_r * I^2_{boost2\_min}$. Thus, the energy available is directly related to $I_{boost1\_min}$ and $I_{boost2\_min}$.

In real circuits, there is generally some loop resistance caused by various reasons, such as on-state drain-to-source resistance of power devices. The minimum first boost current $I_{boost1}$ and second boost current $I_{boost2}$ provide enough resonance energy to compensate for energy dissipation caused by the loop resistance.

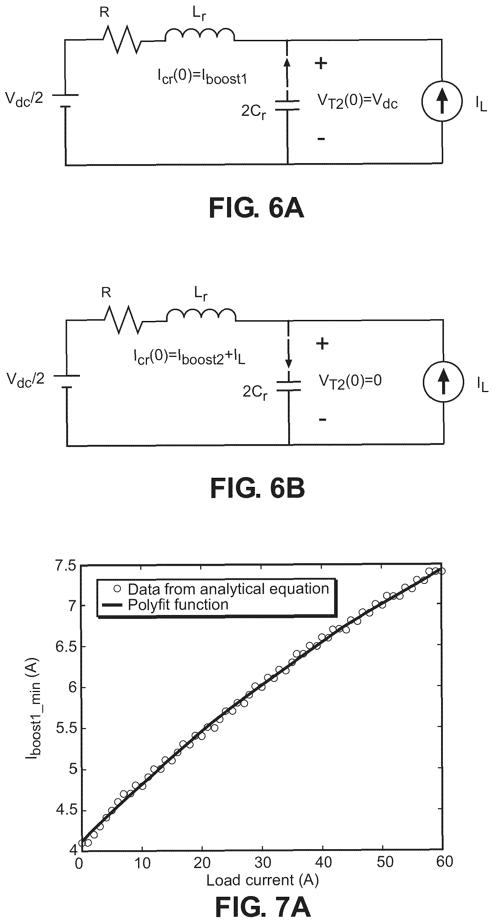

FIG. 6A illustrates an equivalent circuit of a resonance period between t6 and t7 of FIG. 3B according to example embodiments.

FIG. 6B illustrates an equivalent circuit of a resonance period between t1 and t2 of FIG. 3B according to example embodiments.

Referring to FIGS. 2, 6A, and 6B, the two resonant capacitors $C_r$ of top and bottom switches $T_1$ and $T_2$ (e.g., resonant capacitors $C_{r1}$ and $C_{r2}$ of switches $T_1$ and $T_2$, respectively) are equivalent to being in parallel during the resonance periods (e.g., between t1 and t2 and between t6 and t7). For simplicity, only equivalent loop resistance R, resonance inductance $L_r$ equivalent resonance capacitance $2C_r$, and power source $V_{dc}/2$ are shown in FIGS. 6A and 6B. Since the behavior of the top loop ($C_{dc1}$-$T_{r2}$-$T_{r1}$-$L_{r1}$-$T_1$) in FIG. 3A is symmetrical to the bottom loop ($C_{dc2}$-$T_{r2}$-$T_{r1}$-$L_{r1}$-$T_2$),

these two loops are regarded as being in parallel. The resonance capacitance $2C_r$ is therefore shown in FIGS. 6A and 6B. Since switch $T_2$ is in parallel with resonant capacitor $C_{r2}$ in FIG. 3A, the voltage across the resonance capacitance $2C_r$ is the voltage of switch $T_2$.

A voltage of bottom switch $V_{T2}$ (e.g., the voltage across the resonance capacitance $2C_r$), as shown in FIG. 6A can be expressed according to Equation 10, where $\beta = \frac{1}{2}\sqrt{\frac{2}{L_r C_r} - \left(\frac{R}{L_r}\right)^2}$ .

Equation 10

$$V_{T2} = e^{-\frac{R}{2L_r}t}\left(\left(-RI_L + \frac{1}{2}V_{dc}\right)\cos\beta t + \frac{1}{2C_r\beta}\left(-I_{boost1} + \frac{RC_r}{L_r}\left(-RI_L + \frac{1}{2}V_{dc}\right)\right)\sin\beta t\right) + \frac{1}{2}V_{dc} + RI_L$$

The main switch voltage $V_{T2}$ may be decreased to 0 V during the resonance period between t6 and t7, so the switch $T_2$ can be zero voltage turned on, as shown in FIG. 3B. For example, the minimum value of main switch voltage $V_{T2}$ in Equation 10 may be less than zero. Since first boost current $I_{boost1}$ in Equation 10 is controlled by first ramp period $t_{ramp1}$ and a minimized first boost current $I_{boost1}$ is desired to reduce loss, the relationship between the minimum value of first boost current $I_{boost1}$, (e.g., minimum first boost current $I_{boost1\_min}$), and load current $I_L$ can be derived from the ZVS condition of Equation 10 described above. However, a function describing the relationship between the minimum value of first boost current $I_{boost1}$, and load current $I_L$ may be too complex to be expressed analytically. Therefore, this function may be derived by a polyfit function. An example polyfit function is shown in FIG. 7A.

Referring to FIG. 7A, the circles shown represent minimum first boost current $I_{boost1\_min}$ values obtained from Equation 10 when minimum main switch voltage $V_{T2}$ is equal to 0. The curve shown in FIG. 7A represents the polyfit function for those discrete values. A polyfit function such as the example shown in FIG. 7A may be used to regulate first boost current $I_{boost1}$ at different load currents $I_L$, according to example embodiments. The polyfit function shown in FIG. 7A may be expressed as Equation 11.

Equation 11

$$I_{boost1\_min} = -0.00028I_L^2 + 0.072I_L + 4.12$$

For the resonance period between t1 and t2 (e.g., shown in FIG. 6B), the main switch voltage $V_{T2}$ may be expressed according to equation 12.

Equation 12

$$V_{T2} = e^{-\frac{R}{2L_r}t}\left(-\left(RI_L + \frac{1}{2}V_{dc}\right)\cos\beta t + \frac{1}{2C_r\beta}\left((I_{boost2} + I_L) - \frac{RC_r}{L_r}\left(RI_L + \frac{1}{2}V_{dc}\right)\right)\sin\beta t\right) + \frac{1}{2}V_{dc}$$
$$+ RI_L$$

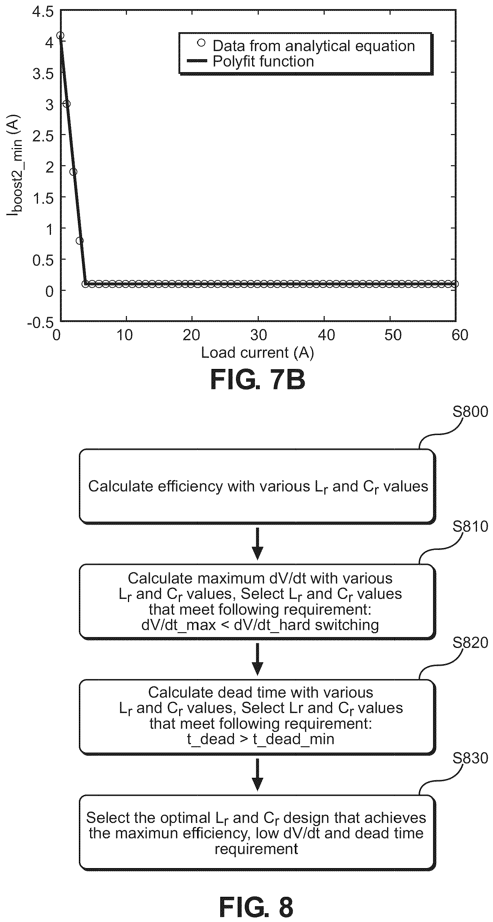

The main switch voltage $V_{T2}$ may be increased to DC bus voltage $V_{dc}$ during the resonance period between t1 and t2 so that the top main switch $T_1$ can be turned on with ZVS between t1 and t2 and afterwards, as shown in FIG. 3B. The minimum second boost current $I_{boost2}$ values, $I_{boost2\_min}$, and the associated polyfit function are shown in FIG. 7B. The polyfit function shown in FIG. 7B may be expressed as Equation 13.

Equation 13

$$I_{boost2\_min} = \begin{cases} -1.02I_L + .402 & (I_L < 4) \\ 0 & (I_L \geq 4) \end{cases}$$

The first and second ramp periods $t_{ramp1}$ and $t_{ramp2}$ can be calculated separately according to Equation 14 and Equation 15, respectively.

Equation 14

$$t_{ramp1} = \frac{L_r\left(I_{boost1} + I_{Phase\_peak}\right)}{\frac{V_{dc}}{2}}$$

Equation 15

$$t_{ramp2} = \frac{L_r I_{boost2}}{\frac{V_{dc}}{2}}$$

Minimum values of first ramp period $t_{ramp1}$ and/or second ramp period $t_{ramp2}$ may therefore be calculated using Equation 11 and Equation 13 together with Equation 14 and Equation 15. By controlling the first and second ramp periods $t_{ramp1}$ and $t_{ramp2}$ using Equations 11 to 15, according to example embodiments, current stress and/or current loss may be reduced or minimized on auxiliary switches $T_r$ and/or resonant inductors $L_r$ while maintaining soft switching functionality in inverter 105.

The method discussed above with regard to FIG. 4 may achieve soft switching in the inverter 105 with reduced or minimized resonant inductor current $I_{Lr}$. However, the above discussed method may not provide for an analysis of the performance of the inverter 105 based on many or all possible design parameter combinations. For example, a lower change in voltage over time dV/dt may be a benefit of the inverter 105 compared to a conventional hard switching inverter that may not be achieved by the method of FIG. 4.

FIG. 8 is a flow chart illustrating a method according to example embodiments. The method shown in FIG. 8 may be performed at the controller 110.

Referring to FIGS. 2 and 8, at S800 the controller 110 calculates an efficiency of the inverter 105 using various resonant inductance $L_r$ and resonant capacitance $C_r$ values for the inductors $L_1$-$L_3$ and the second capacitors $C_{r1}$-$C_{r6}$. For example, the controller 110 may calculate the efficiency of the inverter 105 for each switch of the first switches $T_1$-$T_6$ and/or the second switches $T_{r1}$-$T_{r6}$. The controller 110 may calculate the efficiency of the inverter 105 for a particular switch as a function of a DC bus voltage $V_{dc}$ of inverter 105 (e.g., an inverter voltage), a DC bus current flowing through the inverter 105 (e.g., an inverter current) $I_{dc}$, a voltage (e.g., a time varying voltage) at the first switches $T_1$-$T_6$ (e.g., a switch voltage) $V_{switch}$, a current (e.g., a time varying current) at the first switches $T_1$-$T_6$ (e.g., a switch current) $I_{swtich}$, a turn-on time of the respective switch tswitch_on_trans, a turn-off time of the respective switch tswitch_off_trans, a SiC die temperature of the inverter 105 switches, and/or a number of switches in the circuit. The inverter voltage may be expressed as a waveform with varying value between 0V to $V_{dc}$. The inverter current may be expressed as a waveform with varying value between 0A to $I_{dc}$. The turn-on time and turn-off times may be considered individually for each switch as a function of a SiC die temperature of the respective switch.

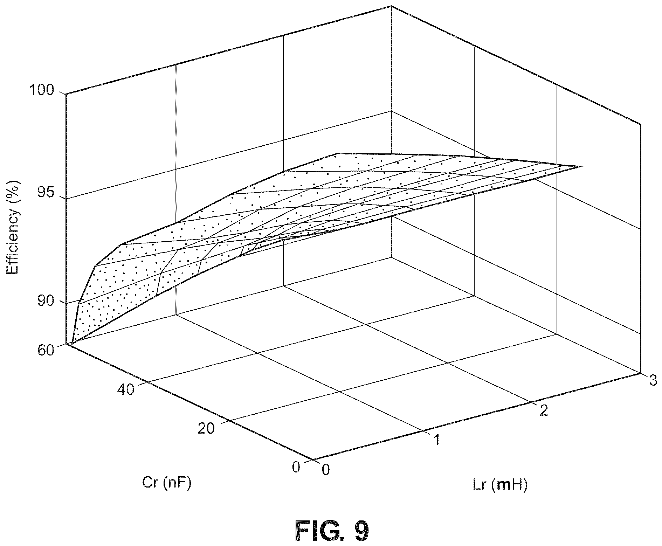

FIG. 9 is an example of inverter efficiency of inverter 105 for various $L_r$ and $C_r$ values based on the hardware parameters for a 10kW design according to Table 1.

Referring to FIG. 9, the efficiency of the inverter 105 increases when both values of resonant inductance $L_r$ and resonant capacitance $C_r$ decrease. While high efficiency may be desired, the maximum efficiency as shown in FIG. 9 may not be the global optimized design if other optimization targets and constraints are considered. For example, a determined maximum efficiency may be different when a change of voltage over time dV/dt is considered as a second optimization target. For example, a maximum change in voltage over time dV/dt of inverter 105 $dV/dt_{ARCP\_max}$ should be smaller than the typical value of hard switching inverter $dV/dt_{\_hardswitching}$, as expressed by Equation 16, so that a possible electromagnetic interference (EMI) issue caused by fast switching speed in a hard switching inverter could be attenuated in the inverter 105 using soft switching.

Equation 16

$$\left.dV\middle/dt_{\_ARCP\_max}\right. < \left.dV\middle/dt_{\_hardswitching}\right.$$

At S810, the controller 110 calculates a maximum change of voltage over time (dV/dt) of the inverter 105 using the various resonant inductance $L_r$ and resonant capacitance $C_r$ values for the inductors $Lr_1$-$Lr_3$ and the second capacitors $C_{r1}$-$C_{r6}$. For example, the controller 110 may calculate the maximum change of voltage over time dV/dt for each switch of the first switches $T_1$-$T_6$. The controller 110 may calculate the maximum change of voltage over time dV/dt for a particular switch as a function of an operating voltage of a switch-on operation of the respective switch $V_{switch\_on}$, an operating voltage of a switch-off operation of the respective switch $V_{switch\_off}$, a turn-on time of the respective switch tswitch_on_trans, and/or a turn-off time of the respective switch tswitch_off_trans. The operating voltage of the switch-on operation of a switch $V_{switch\_on}$ may be determined according to the equation $V_{switch\_on}=V_{dc}/tswitch\_on\_trans$, and/or a SiC die temperature of the inverter 105 switches. The operating voltage of the switch-off operation of a switch $V_{switch\_off}$ may be determined according to the equation $V_{switch\_off}=V_{dc}+L_{dc}(I_{dc}/tswitch\_off\_trans)$, where $L_{dc}$ is a stray parameter indicating a bus inductance of the inverter 105.

The controller 110 may select resonant inductance values $L_r$ and resonant capacitance values $C_r$ that result in a maximum change of voltage over time $dV/dt_{ARCP\_max}$ that is less than a threshold voltage over time of the inverter 105 calculated according to hard switching (e.g., switching performed by only the first switches $T_1$-$T_6$).

For example, the controller may calculate the maximum change of voltage over time of inverter 105 $dV/dt_{ARCP\_max}$ using Equation 6, Equation 9, and Equation 17.

Equation 17

$$dV/dt_{ARCP\_max} = \frac{V_{dc}}{t_{res\_min}}$$

At S820, the controller 110 calculates a dead time $t_{dead}$ of the inverter 105 using various resonant inductance $L_r$ and resonant capacitance $C_r$ values for the inductors $Lr_1$-$Lr_3$ and the second capacitors $C_{r1}$-$C_{r6}$. The dead time $t_{dead}$ is a variable that relates to soft switching performance of the inverter 105. For example, the dead time $t_{dead}$ may indicate a waiting time between an on/off operation of two complementary switches. Two switches that are connected serially may be referred to herein as complementary. For example, referring to FIG. 2, first switches $T_1$ and $T_2$ are complementary, first switches $T_3$ and $T_4$ are complementary, first switches $T_5$ and $T_6$ are complementary, second switches $T_{r1}$ and $T_{r2}$ are complementary, second switches $T_{r3}$ and $T_{r4}$ are complementary, and second switches $T_{r5}$ and $T_{r6}$ are complementary.

The controller 110 may calculate the dead time $t_{dead}$ of the inverter 105 for each switch of the first switches $T_1$-$T_6$. The controller 110 may calculate the dead time $t_{dead}$ of the inverter 105 for a particular switch as a function of the resonant inductance $L_r$, the resonant capacitance $C_r$, a switch operating (e.g., on/off) time of the respective switch tswitch_trans, a temperature of the respective switch switch_temp, the input DC bus voltage $V_{dc}$, and/or the input inverter current $I_{dc}$. The controller may select resonant inductance values $L_r$ and resonant capacitance values $C_r$ that result in the calculated dead time being below a minimum threshold value.

For example, the controller 110 may calculate the dead time of inverter 105 using Equation 7. Considering the minimum transition time and delay of power switches, dead time $t_{dead}$ of the inverter 105 should be larger than a minimum value as described in Equation 18 to reduce or prevent a possible shoot-through issue.

Equation 18

$$t_{dead} > t_{dead\_min}$$

At S830, the controller 110 selects a resonant inductance value $L_r$ and/or a resonant capacitance value $C_r$ for the inductors $L_{r1}$-$L_{r3}$ and the second capacitors $C_{r1}$-$C_{r6}$. For example, the controller 110 may select resonant inductance values $L_{r1}$-$L_{r3}$ and resonant capacitance values $C_{r1}$-$C_{r3}$ that optimizes efficiency of the inverter 105 while also resulting in a maximum change of voltage over time $dV/dt$ that is less than a voltage over time of the inverter 105 calculated according to hard switching and/or resulting in the calculated dead time $t_{dead}$ being below the minimum threshold value. For example, the controller 110 may select a resonant inductance value $L_r$ and a resonant capacitance value $C_r$ that lead to the maximum efficiency with a lowest change in voltage over time $dV/dt$ value for the inverter 105. For example, the controller 110 may select a resonant inductance value $L_r$ and a resonant capacitance value $C_r$ with a highest efficiency value of the inverter 105 that also satisfies the threshold voltage requirements and threshold dead time $t_{dead}$ requirements discussed above.

Alternatively, the controller 110 may use a fixed value of resonant conductance $C_r$ (for example, the fixed resonant conductance $C_r$ value may be based on cost, size, $0.5 C_r V_{dc}^2$ loss incurred in the switch, etc.) and may vary only the resonant inductance $L_r$ values while observing soft-switch conditions occurring at a given operating point. Using a fixed resonant conductance $C_r$ value while varying the resonant inductance $L_r$ values will cause hard switching, but the controller 110 may operate the inverter 105 at a super low frequency (e.g., less than 4kHz) during periods of hard switching, and raise the switching frequency (e.g., to greater than 40 kHz) when the soft-switching conditions are observed. This alternative may be feasible with less precision of design and selection of resonant inductance $L_r$ and resonant capacitance $C_r$ values and could widen an operating power range of the inverter 105.

The inverter 105 may be assembled with inductors $L_{r1}$-$L_{r3}$ having the selected resonant inductance value $L_r$ and with second capacitors $C_{r1}$-$C_{r6}$ having the selected resonant capacitance value $C_r$.

According to some example embodiments, the inductors $L_{r1}$-$L_{r3}$ may be variable inductors. The controller 110 may perform the operations discussed with reference to FIG. 8 during implementation of the inverter. For example, the controller 110 may execute the method according to FIG. 8 during operation of the electro-mechanical system 152 and modify a value of the variable inductors $L_{r1}$-$L_{r3}$ according to the selected resonant inductance value $L_r$ to fit a desired power output for the inverter 105.

A method for optimizing an inverter for soft switching according to at least some example embodiments includes calculating efficiency values of the inverter based on a plurality of possible resonant inductance values and a plurality of possible resonant capacitance values, calculating change of voltage over time values of the inverter based on the plurality of possible resonant inductance values and the plurality of possible resonant capacitance values, and selecting a resonant inductance value of the plurality of possible resonant inductance values and a resonant capacitance value of the plurality of possible resonant capacitance values based on the calculated efficiency values of the inverter and the calculated change of voltage over time values.

In at least some example embodiments, the method includes calculating dead time values of the inverter based on the plurality of resonant inductance values and the plurality of resonant capacitance values.

In at least some example embodiments, the dead time values indicate a waiting time between two complementary switches.

In at least some example embodiments, the calculating the dead time values includes calculating the dead time values based on at least two of a possible resonant inductance value of the plurality of possible resonant inductance values, a possible resonant capacitance values, a switch operation time, a switch temperature, an input voltage, or an input current.

In at least some example embodiments, the selecting the resonant inductance values and the resonant capacitance values includes selecting a resonant inductance value of the plurality of possible resonant inductance values and a resonant capacitance value of the plurality of possible resonant capacitance values that satisfy a threshold dead time value.

In at least some example embodiments, the calculating the efficiency values of the inverter includes calculating the efficiency values according to a simulation model of the inverter.

In at least some example embodiments, the calculating the efficiency values of the inverter includes calculating the efficiency value of the inverter based on at least two of an inverter voltage, an inverter current, a switch voltage, a switch current, a switch turn-on time, a switch turn-off time, a switch die temperature, or a number of switches in the inverter.

In at least some example embodiments, the calculating the maximum change of voltage over time values includes calculating the maximum change of voltage over time of the inverter based on at least two of a switch-on voltage of a respective switch, a switch-off voltage of the respective switch, a turn-on time of the respective switch, or a turn-off time of the respective switch.

In at least some example embodiments, the selecting the resonant inductance values and the resonant capacitance values includes selecting a resonant inductance value of the plurality of possible resonant inductance values and a resonant capacitance value of the plurality of possible resonant capacitance values that lead to the highest efficiency value of the calculated efficiency values and the lowest change of voltage over time value of the calculated change of voltage over time values.

In at least some example embodiments, the inverter is an auxiliary resonant commutated pole (ARCP) inverter.

In at least some example embodiments, the inverter includes a plurality of first switches and a plurality of second switches, each first switch of the plurality of first switches including a respective resonant capacitor connected in parallel to the respective first switch.

In at least some example embodiments, the inverter includes a resonant inductor electrically connected between the plurality of first switches and the plurality of second switches.

In at least some example embodiments, the method further includes assembling the inverter to include the selected resonant inductance value and the selected resonant capacitance value.

In at least some example embodiments, the method further includes changing a value of a variable inductor of the inverter based on the selected resonant inductance value while the inverter operates.

An electric drive according to example embodiments includes an inverter and processing circuitry configured to cause the electric drive to calculate efficiency values of the inverter based on a plurality of possible resonant inductance values and a plurality of possible resonant capacitance values, calculate change of voltage over time values of the inverter based on the plurality of possible resonant inductance values and the plurality of possible resonant capacitance values, and select a resonant inductance value of the plurality of possible resonant inductance values and a resonant capacitance value of the plurality of possible resonant capacitance values based on the calculated efficiency values of the inverter and the calculated change of voltage over time values.

In at least some example embodiments, the processing circuitry is further configured to cause the electric drive to calculate dead time values of the inverter based on the plurality of possible resonant inductance values and the plurality of possible resonant capacitance values.

In at least some example embodiments, the dead time values indicate a waiting time between two complementary switches.

In at least some example embodiments, the processing circuitry is configured to cause the electric drive to calculate the dead time values based on at least two of a possible resonant inductance value of the plurality of possible resonant inductance values, a possible resonant capacitance value, a switch operation time, a switch temperature, an input voltage, or an input current.

In at least some example embodiments, the processing circuitry is further configured to cause the electric drive to select a resonant inductance value of the plurality of possible resonant inductance values and a resonant capacitance value of the plurality of possible resonant capacitance values that satisfy a threshold dead time value.

In at least some example embodiments, the processing circuitry is further configured to calculate the efficiency values according to a simulation model of the inverter.

In at least some example embodiments, the processing circuitry is further configured to calculate the efficiency value of the inverter based on at least two of an inverter voltage, an inverter current, a switch voltage, a switch current, a switch turn-on time, a switch turn-off time, a switch die temperature, or a number of switches in the inverter.

In at least some example embodiments, the processing circuitry is further configured to cause the electric drive to calculate the maximum change of voltage over time of the inverter based on at least two of a switch-on voltage of a respective switch, a switch-off voltage of the respective switch, a turn-on time of the respective switch, or a turn-off time of the respective switch.

In at least some example embodiments, the processing circuitry is further configured to cause the electric drive to select a resonant inductance value of the plurality of possible resonant inductance values and a resonant capacitance value of the plurality of possible resonant capacitance values that lead to the highest efficiency value of the calculated efficiency values and the lowest change of voltage over time value of the calculated change of voltage over time values.

In at least some example embodiments, the inverter is an auxiliary resonant commutated pole (ARCP) inverter.

In at least some example embodiments, the inverter includes a plurality of first switches and a plurality of second switches, each first switch of the plurality of first switches including a respective resonant capacitor connected in parallel to the respective first switch.

In at least some example embodiments, the inverter includes a resonant inductor electrically connected between the plurality of first switches and the plurality of second switches.

In at least some example embodiments, the processing circuitry is further configured to cause the electric drive to change a value of a variable inductor of the inverter based on the selected resonant inductance value while the inverter operates.

An inverter according to example embodiments includes a plurality of inductors having a resonant inductance value, and a plurality of capacitors having a resonant capacitance value, wherein the resonant inductance value and the resonant capacitance value are based on calculated efficiency values of the inverter and calculated change of voltage over time values of the inverter, wherein the calculated efficiency values of the inverter are based on a plurality of possible resonant inductance values and a plurality of possible resonant capacitance values, and wherein the calculated change of voltage over time values of the inverter are based on the plurality of possible resonant inductance values and the plurality of possible resonant capacitance values.

At least one example embodiment provides a non-transitory computer readable storage medium storing computer executable instructions that, when executed, cause a device to perform a method for optimizing an inverter for soft switching, the method including calculating efficiency values of the inverter based on a plurality of possible resonant inductance values and a plurality of possible resonant capacitance values, calculating change of voltage over time values of the inverter based on the plurality of possible resonant inductance values and the plurality of possible resonant capacitance values, and selecting a resonant inductance value of the plurality of possible resonant inductance values and a resonant capacitance value of the plurality of possible resonant capacitance values based on the calculated efficiency values of the inverter and the calculated change of voltage over time values.

At least one example embodiment provides a device for optimizing an inverter for soft switching, the device including a means for calculating efficiency values of the inverter based on a plurality of possible resonant inductance values and a plurality of possible resonant capacitance values, a means for calculating change of voltage over time values of the inverter based on the plurality of possible resonant inductance values and the plurality of possible resonant capacitance values, and a means for selecting a resonant inductance value of the plurality of possible resonant inductance values and a resonant capacitance value of the plurality of possible resonant capacitance values based on the calculated efficiency values of the inverter and the calculated change of voltage over time values.

G. Tabrizi, F. Schnabel and M. Jung, "Optimized Design Method and Control of an Auxiliary Resonant Commutated Pole Inverter for Two Level Photovoltaic Inverters," PCIM Europe digital days 2021; International Exhibition and Conference for Power Electronics, Intelligent Motion, Renewable Energy and Energy Management, Online, 2021, pp. 1-8 and A. Charalambous, X. Yuan and N. McNeill, "High-Frequency EMI Attenuation at Source With the Auxiliary Commutated Pole Inverter," in IEEE Transactions on Power Electronics, vol. 33, no. 7, pp. 5660-5676, July 2018 discuss parameter optimization in soft switching inverters, the contents of each of with are herein incorporated by reference in their entireties.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

The phrase "at least one of A, B, and C" should be construed to mean a logical (A OR B OR C), using a non-exclusive logical OR, and should not be construed to mean "at least one of A, at least one of B, and at least one of C." The term "set" does not necessarily exclude the empty set. The term "non-empty set" may be used to indicate exclusion of the empty set. The term "subset" does not necessarily require a proper subset. In other words, a first subset of a first set may be coextensive with (equal to) the first set.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

In this application, including the definitions below, the term "module" or the term "controller" may be replaced with the term "circuit." The term "module" may refer to, be part of, or include processor hardware (shared, dedicated, or group) that executes code and memory hardware (shared, dedicated, or group) that stores code executed by the processor hardware.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2016 (also known as the WIFI wireless networking standard) and IEEE Standard 802.3-2015 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single micro-

**EP 4 618 399 A1**

processor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of a non-transitory computer-readable medium are nonvolatile memory devices (such as a flash memory device, an erasable programmable read-only memory device, or a mask read-only memory device), volatile memory devices (such as a static random access memory device or a dynamic random access memory device), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. Such apparatuses and methods may be described as computerized apparatuses and computerized methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java®, Fortran, Perl, Pascal, Curl, OCaml, JavaScript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

Embodiments of the present disclosure may be described with reference to the following numbered clauses, with preferred features laid out in the dependent clauses:

Clause 1. A method for optimizing an inverter for soft switching, the method comprising:

calculating efficiency values of the inverter based on a plurality of possible resonant inductance values and a plurality of possible resonant capacitance values;
calculating change of voltage over time values of the inverter based on the plurality of possible resonant inductance values and the plurality of possible resonant capacitance values; and
selecting a resonant inductance value of the plurality of possible resonant inductance values and a resonant capacitance value of the plurality of possible resonant capacitance values based on the calculated efficiency values of the inverter and the calculated change of voltage over time values.

Clause 2. The method of clause 1, further comprising:
calculating dead time values of the inverter based on the plurality of possible resonant inductance values and the plurality of possible resonant capacitance values.
Clause 3. The method of clause 2, wherein the dead time values indicate a waiting time between two complementary switches.
Clause 4. The method of clause 2 or 3, wherein the calculating the dead time values includes calculating the dead time values based on at least two of a possible resonant inductance value of the plurality of possible resonant inductance values, a possible resonant capacitance value, a switch operation time, a switch temperature, an input voltage, or an input current.
Clause 5. The method of any of clauses 2 to 4, wherein the selecting the resonant inductance values and the resonant capacitance values includes selecting a resonant inductance value of the plurality of possible resonant inductance values and a resonant capacitance value of the plurality of possible resonant capacitance values that satisfy a

13

threshold dead time value.

Clause 6. The method of any of clauses 1 to 5, wherein the calculating the efficiency values of the inverter includes calculating the efficiency values according to a simulation model of the inverter.

Clause 7. The method of any of clauses 1 to 6, wherein the calculating the efficiency values of the inverter includes calculating the efficiency value of the inverter based on at least two of an inverter voltage, an inverter current, a switch voltage, a switch current, a switch turn-on time, a switch turn-off time, a switch die temperature, or a number of switches in the inverter.

Clause 8. The method of any of clauses 1 to 7, wherein the calculating the change of voltage over time values includes calculating a maximum change of voltage over time of the inverter based on at least two of a switch-on voltage of a respective switch, a switch-off voltage of the respective switch, a turn-on time of the respective switch, or a turn-off time of the respective switch.

Clause 9. The method of any of clauses 1 to 8, wherein the selecting the resonant inductance values and the resonant capacitance values includes selecting a resonant inductance value of the plurality of possible resonant inductance values and a resonant capacitance value of the plurality of possible resonant capacitance values that lead to a highest efficiency value of the calculated efficiency values and a lowest change of voltage over time value of the calculated change of voltage over time values.

Clause 10. The method of any of clauses 1 to 9, wherein the inverter is an auxiliary resonant commutated pole (ARCP) inverter.

Clause 11. The method of any of clauses 1 to 10, wherein the inverter includes a plurality of first switches and a plurality of second switches, each first switch of the plurality of first switches including a respective resonant capacitor connected in parallel to the respective first switch.

Clause 12. The method of clause 11, wherein the inverter includes a resonant inductor electrically connected between the plurality of first switches and the plurality of second switches.

Clause 13. The method of any of clauses 1 to 12, further comprising:

assembling the inverter to include the selected resonant inductance value and the selected resonant capacitance value.

Clause 14. The method of any of clauses 1 to 13, further comprising:

changing a value of a variable inductor of the inverter based on the selected resonant inductance value while the inverter operates.

Clause 15. An electric drive comprising:

an inverter; and
processing circuitry configured to cause the electric drive to

calculate efficiency values of the inverter based on a plurality of possible resonant inductance values and a plurality of possible resonant capacitance values,
calculate change of voltage over time values of the inverter based on the plurality of possible resonant inductance values and the plurality of possible resonant capacitance values, and
select a resonant inductance value of the plurality of possible resonant inductance values and a resonant capacitance value of the plurality of possible resonant capacitance values based on the calculated efficiency values of the inverter and the calculated change of voltage over time values.

Clause 16. The electric drive of clause 15, wherein the processing circuitry is further configured to cause the electric drive to calculate dead time values of the inverter based on the plurality of possible resonant inductance values and the plurality of possible resonant capacitance values.

Clause 17. The electric drive of clause 16, wherein the dead time values indicate a waiting time between two complementary switches.

Clause 18. The electric drive of clause 16 or 17, wherein the processing circuitry is configured to cause the electric drive to calculate the dead time values based on at least two of a possible resonant inductance value of the plurality of possible resonant inductance values, a possible resonant capacitance value, a switch operation time, a switch temperature, an input voltage, or an input current.

Clause 19. The electric drive of any of clauses 16 to 18, wherein the processing circuitry is further configured to cause the electric drive to select a resonant inductance value of the plurality of possible resonant inductance values and a resonant capacitance value of the plurality of possible resonant capacitance values that satisfy a threshold dead time value.

Clause 20. The electric drive of any of clauses 15 to 19, wherein the processing circuitry is further configured to calculate the efficiency values according to a simulation model of the inverter.

Clause 21. The electric drive of any of clauses 15 to 20, wherein the processing circuitry is further configured to calculate the efficiency values of the inverter based on at least two of an inverter voltage, an inverter current, a switch voltage, a switch current, a switch turn-on time, a switch turn-off time, a switch die temperature, or a number of switches in the inverter.

Clause 22. The electric drive of any of clauses 15 to 21, wherein the processing circuitry is further configured to cause the electric drive to calculate a maximum change of voltage over time of the inverter based on at least two of a switch-on voltage of a respective switch, a switch-off voltage of the respective switch, a turn-on time of the respective switch, or a turn-off time of the respective switch.

Clause 23. The electric drive of any of clauses 15 to 22, wherein the processing circuitry is further configured to cause the electric drive to select a resonant inductance value of the plurality of possible resonant inductance values and a resonant capacitance value of the plurality of possible resonant capacitance values that lead to a highest efficiency value of the calculated efficiency values and a lowest change of voltage over time value of the calculated change of voltage over time values.

Clause 24. The electric drive of any of clauses 15 to 23, wherein the inverter is an auxiliary resonant commutated pole (ARCP) inverter.

Clause 25. The electric drive of any of clauses 15 to 24, wherein the inverter includes a plurality of first switches and a plurality of second switches, each first switch of the plurality of first switches including a respective resonant capacitor connected in parallel to the respective first switch.

Clause 26. The electric drive of clause 25, wherein the inverter includes a resonant inductor electrically connected between the plurality of first switches and the plurality of second switches.

Clause 27. The electric drive of any of clauses 15 to 26, wherein the processing circuitry is further configured to cause the electric drive to change a value of a variable inductor of the inverter based on the selected resonant inductance value while the inverter operates.

Clause 28. An inverter comprising:

a plurality of inductors having a resonant inductance value; and
a plurality of capacitors having a resonant capacitance value,
wherein the resonant inductance value and the resonant capacitance value are based on calculated efficiency values of the inverter and calculated change of voltage over time values of the inverter,
wherein the calculated efficiency values of the inverter are based on a plurality of possible resonant inductance values and a plurality of possible resonant capacitance values, and
wherein the calculated change of voltage over time values of the inverter are based on the plurality of possible resonant inductance values and the plurality of possible resonant capacitance values.

**Claims**

1. A method for optimizing an inverter (105) for soft switching, the method comprising:

calculating efficiency values of the inverter (105) based on a plurality of possible resonant inductance values ($L_r$) and a plurality of possible resonant capacitance values ($C_r$);
calculating change of voltage over time values (dV/dt) of the inverter (105) based on the plurality of possible resonant inductance values ($L_r$) and the plurality of possible resonant capacitance values ($C_r$); and
selecting a resonant inductance value ($L_r$) of the plurality of possible resonant inductance values ($L_r$) and a resonant capacitance value ($C_r$) of the plurality of possible resonant capacitance values ($C_r$) based on the calculated efficiency values of the inverter (105) and the calculated change of voltage over time values (dV/dt).

2. The method of claim 1, further comprising:
calculating dead time values ($t_{dead}$) of the inverter (105) based on the plurality of possible resonant inductance values ($L_r$) and the plurality of possible resonant capacitance values ($C_r$).

3. The method of claim 2, wherein the dead time values ($t_{dead}$) indicate a waiting time between two complementary switches ($T_1$-$T_6$).

4. The method of either of claim 2 or claim 3, wherein the calculating the dead time values ($t_{dead}$) includes calculating the dead time values ($t_{dead}$) based on at least two of a possible resonant inductance value ($L_r$) of the plurality of possible resonant inductance values ($L_r$), a possible resonant capacitance value ($C_r$), a switch operation time (tswitch_trans), a switch temperature (switch_temp), an input voltage ($V_{dc}$), or an input current ($I_{dc}$).

5. The method of any one of claims 2 to 4, wherein the selecting the resonant inductance values ($L_r$) and the resonant capacitance values ($C_r$) includes selecting a resonant inductance value ($L_r$) of the plurality of possible resonant inductance values ($L_r$) and a resonant capacitance value ($C_r$) of the plurality of possible resonant capacitance values ($C_r$) that satisfy a threshold dead time value ($t_{dead}$).

6. The method of any preceding claim, wherein the calculating the efficiency values of the inverter (105) includes calculating the efficiency values according to a simulation model of the inverter (105).

7. The method of any preceding claim, wherein the calculating the efficiency values of the inverter (105) includes calculating the efficiency value of the inverter (105) based on at least two of an inverter voltage ($V_{dc}$), an inverter current ($I_{dc}$), a switch voltage ($V_{switch}$), a switch current ($I_{dc}$), a switch turn-on time (tswitch_on_trans), a switch turn-off time (tswitch_off_trans), a switch die temperature, or a number of switches ($T$, $T_r$) in the inverter (105).

8. The method of any preceding claim, wherein the calculating the change of voltage over time values (dV/dt) includes calculating a maximum change of voltage over time ($dV/dt_{ARCP\_max}$) of the inverter (105) based on at least two of a switch-on voltage of a respective switch ($V_{switch\_on}$), a switch-off voltage of the respective switch ($V_{switch\_off}$), a turn-on time of the respective switch (tswitch_on_trans), or a turn-off time of the respective switch (tswitch_off_trans).

9. The method of any preceding claim, wherein the selecting the resonant inductance values ($L_r$) and the resonant capacitance values ($C_r$) includes selecting a resonant inductance value ($L_r$) of the plurality of possible resonant inductance values ($L_r$) and a resonant capacitance value ($C_r$) of the plurality of possible resonant capacitance values ($C_r$) that lead to a highest efficiency value of the calculated efficiency values and a lowest change of voltage over time value (dV/dt) of the calculated change of voltage over time values (dV/dt).

10. The method of any preceding claim, wherein the inverter (105) is an auxiliary resonant commutated pole, ARCP, inverter.

11. The method of any preceding claim, wherein the inverter (105) includes a plurality of first switches ($T_{r1}$-$T_{r6}$) and a plurality of second switches ($T_1$-$T_6$), each first switch of the plurality of first switches ($T_{r1}$-$T_{r6}$) including a respective resonant capacitor ($C_{r1}$-$C_{r6}$) connected in parallel to the respective first switch ($T_{r1}$-$T_{r6}$).

12. The method of claim 11, wherein the inverter (105) includes a resonant inductor ($L_{r1}$-$L_{r3}$) electrically connected between the plurality of first switches ($T_{r1}$-$T_{r6}$) and the plurality of second switches ($T_1$-$T_6$).

13. The method of any preceding claim, further comprising:
assembling the inverter (105) to include the selected resonant inductance value ($L_r$) and the selected resonant capacitance value ($C_r$).

14. The method of any preceding claim, further comprising:
changing a value of a variable inductor ($L_{r1}$-$L_{r3}$) of the inverter (105) based on the selected resonant inductance value ($L_r$) while the inverter (105) operates.

15. An electric drive (10) comprising:

an inverter (105); and
processing circuitry (120) configured to cause the electric drive (10) to

calculate efficiency values of the inverter (105) based on a plurality of possible resonant inductance values ($L_r$) and a plurality of possible resonant capacitance values ($C_r$),
calculate change of voltage over time values (dV/dt) of the inverter (105) based on the plurality of possible resonant inductance values ($L_r$) and the plurality of possible resonant capacitance values ($C_r$), and
select a resonant inductance value ($L_r$) of the plurality of possible resonant inductance values ($L_r$) and a resonant capacitance value ($C_r$) of the plurality of possible resonant capacitance values ($C_r$) based on the calculated efficiency values of the inverter (105) and the calculated change of voltage over time values dV/dt).

**FIG. 1**

FIG. 2

FIG. 3A

FIG. 3B

FIG. 3C

S400

Specify working
conditions

S410

Calculate maximum
resonant inductor
current conduction
time and auxillary
switch conduction
time

S420

Calculate resonant
inductance

S430

Calculate resonance
capacitance

S440

Calculate dead time

S450

Calculate tramp1
and tramp2

# FIG. 4

FIG. 5

**FIG. 6A**

**FIG. 6B**

**FIG. 7A**

**FIG. 7B**

S800

Calculate efficiency with various $L_r$ and $C_r$ values

S810

Calculate maximum dV/dt with various $L_r$ and $C_r$ values, Select $L_r$ and $C_r$ values that meet following requirement: dV/dt_max < dV/dt_hard switching

S820

Calculate dead time with various $L_r$ and $C_r$ values, Select Lr and $C_r$ values that meet following requirement: t_dead > t_dead_min

S830

Select the optimal $L_r$ and $C_r$ design that achieves the maximun efficiency, low dV/dt and dead time requirement

**FIG. 8**

**FIG. 9**

Europäisches
Patentamt

European
Patent Office

Office européen
des brevets

**EUROPEAN SEARCH REPORT**

**Application Number**

EP 25 15 6684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Salehi Navid ET AL: "A Comparative Study of Different Optimization Methods for Resonance Half-Bridge Converter", Electronics 2018, 2 December 2018 (2018-12-02), XP093290124, Retrieved from the Internet: URL:https://doi.org/10.3390/electronics7120368 [retrieved on 2025-06-26] * Section 4; pages 7, 13; figures 1, 4; tables 3,6-8 * | 1-15 | INV. H02M7/48 H02M1/38 H02M1/00 |
| A | BO QIANG ET AL: "Characteristic Analysis for Multi-Objective Optimization in Wireless Power Transfer System", 2023 IEEE INTERNATIONAL CONFERENCE ON POWER SCIENCE AND TECHNOLOGY (ICPST), IEEE, 5 May 2023 (2023-05-05), pages 1058-1063, XP034370710, DOI: 10.1109/ICPST56889.2023.10165453 [retrieved on 2023-07-05] * abstract * | 1-15 | |

-----

-----

-/--

TECHNICAL FIELDS SEARCHED (IPC)

H02M

The present search report has been drawn up for all claims

| Place of search | Date of completion of the search | Examiner |
|---|---|---|
| The Hague | 10 July 2025 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

EP 4 618 399 A1

# EUROPEAN SEARCH REPORT

Application Number

EP 25 15 6684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TEICHMANN R ED  - INSTITUTE OF ELECTRICAL AND ELECTRONICS ENGINEERS: "Control parameter selection in auxiliary resonant commutated pole converters", IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001; [ANNUAL CONFERENCE OF THE IEEE INDUSTRIAL ELECTRONICS SOCIETY], NEW YORK, NY : IEEE, US, vol. 2, 29 November 2001 (2001-11-29), pages 862-869, XP010572891, DOI: 10.1109/IECON.2001.975870 ISBN: 978-0-7803-7108-8 * pages 1, 3; figure 1 * | 8,10-12 | |
| A | CN 109 560 618 A (GUANGZHOU ZLG SINGLECHIP TECH CO LTD) 2 April 2019 (2019-04-02) * figure 5 * | 14 | |

TECHNICAL FIELDS SEARCHED      (IPC)

The present search report has been drawn up for all claims

| Place of search | Date of completion of the search | Examiner |
|---|---|---|
| The Hague | 10 July 2025 | Zeljkovic, Sandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

26

## ANNEX TO THE EUROPEAN SEARCH REPORT
## ON EUROPEAN PATENT APPLICATION NO.

EP 25 15 6684

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | Publication date | Patent family member(s) | Publication date |
|---|---|---|---|
| CN 109560618 A | 02-04-2019 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63565328

- US 20040246756 A1, Bijlenga

**Non-patent literature cited in the description**

- **R. W. DE DONCKER** ; **J. P. LYONS**. The auxiliary resonant commutated pole converter. *Conference Record of the 1990 IEEE Industry Applications Society Annual Meeting*, 1990, vol. 2, 1228-1235
- **G. TABRIZI** ; **F. SCHNABEL** ; **M. JUNG**. Optimized Design Method and Control of an Auxiliary Resonant Commutated Pole Inverter for Two Level Photovoltaic Inverters. *PCIM Europe digital days 2021; International Exhibition and Conference for Power Electronics, Intelligent Motion, Renewable Energy and Energy Management*, 2021, 1-8

- **A. CHARALAMBOUS** ; **X. YUAN** ; **N. MCNEILL**. High-Frequency EMI Attenuation at Source With the Auxiliary Commutated Pole Inverter. *IEEE Transactions on Power Electronics*, July 2018, vol. 33 (7), 5660-5676